# FASCICULE DE BREVET EUROPEEN

(11) **EP 3 625 077 B1**
(45) Date de publication et mention de la délivrance du brevet: **14.04.2021**
(21) Numéro de dépôt: 18735351.1
(22) Date de dépôt: 02.05.2018
(51) Int. Cl.: B60L 50/15, B60L 53/14, B60L 50/60, B60L 15/00, B60L 53/22, B60K 1/02, B60K 17/354

(54) **VÉHICULE À MACHINE MOTRICE ÉLECTRIQUE OPTIONNELLE COUPLANT UNE BATTERIE NON DIVERSIFIABLE À UN CHARGEUR**
FAHRZEUG MIT OPTIONALER ELEKTRISCHER ANTRIEBSMASCHINE, DIE EINE NICHT DIVERSIFIZIERBARE BATTERIE AN EIN LADEGERÄT KOPPELT
VEHICLE WITH OPTIONAL ELECTRIC DRIVE MACHINE COUPLING A NON-DIVERSIFIABLE BATTERY TO A CHARGER

(30) Priorité: 18.05.2017 FR 1754375
(43) Date de publication de la demande: 25.03.2020
(73) Titulaire: PSA Automobiles SA, 78300 Poissy (FR)
(72) Inventeur: DUQUENE, Pierre, 92150 SURESNES (FR)
(86) Numéro de dépôt international: PCT/FR2018/051083
(87) Numéro de publication internationale: WO 2018/211195

(56) Documents cités:
- EP-A1- 2 858 140
- WO-A1-2015/040470
- US-A1- 2010 227 505

## Description

L'invention concerne les véhicules ayant une chaîne de transmission pouvant comprendre, selon les options, une ou deux machines motrices électriques.

On entend ici par « machine motrice électrique » une machine (ou un moteur) électrique agencé(e) de manière à fournir ou récupérer du couple pour déplacer un véhicule, soit seul(e) soit en complément d'au moins une éventuelle autre machine motrice électrique ou thermique (comme par exemple un moteur thermique).

Certains véhicules, éventuellement de type automobile et éventuellement hybrides, comprennent une chaîne de transmission pouvant présenter deux déclinaisons selon les options choisies. Une première déclinaison, par exemple adaptée à deux roues motrices, comprend une première machine motrice électrique et participant à l'entraînement d'un premier train, et au moins une batterie rechargeable alimentant en énergie électrique au moins cette première machine motrice et couplée à un chargeur. Une seconde déclinaison, par exemple adaptée à quatre roues motrices, comprend une première machine motrice électrique et participant à l'entraînement d'un premier train, au moins une batterie rechargeable alimentant en énergie électrique au moins cette première machine motrice et couplée à un chargeur, et une seconde machine motrice électrique et participant à l'entraînement d'un second train.

On connait en outre du document de brevet WO-A1-2015040470 un véhicule à propulsion électrique équipé d'une batterie, d'un moteur avant, d'un onduleur avant, d'un moteur arrière, d'un onduleur arrière et d'un distributeur.

Comme le sait l'homme de l'art, actuellement lorsqu'un constructeur de véhicule veut proposer deux déclinaisons d'une chaîne de transmission pour un même modèle de véhicule, il est contraint de prévoir deux types de batterie et/ou deux architectures différentes, ce qui rend plus difficile la phase de conception et introduit de la diversité qui pose des problèmes de gestion de stock et de logistique dans les usines d'assemblage et les services après-vente.

L'invention a donc notamment pour but d'améliorer la situation.

Elle propose à cet effet un véhicule comprenant une chaîne de transmission comportant une première machine motrice électrique et participant à l'entraînement d'un premier train, au moins une batterie rechargeable alimentant en énergie électrique au moins cette première machine motrice et couplée à un chargeur, ainsi qu'éventuellement une seconde machine motrice électrique et participant à l'entraînement d'un second train.

Ce véhicule se caractérise par le fait :
- qu'en l'absence de la seconde machine motrice la batterie rechargeable est couplée directement au chargeur via un premier faisceau électrique,
- tandis qu'en présence de cette seconde machine motrice la batterie rechargeable est couplée indirectement au chargeur via la seconde machine motrice et le premier et un second faisceaux électriques.

Ainsi, non seulement on n'a plus besoin de prévoir deux types de batterie pour les deux déclinaisons de la chaîne de transmission, mais également on est certain qu'une fois que l'on a conçu une première architecture à deux machines motrices électriques, la seconde architecture à une seule machine motrice électrique peut être déduite de la première architecture par un retrait de la seconde machine motrice électrique.

Le véhicule selon l'invention peut comporter d'autres caractéristiques qui peuvent être prises séparément ou en combinaison, et notamment :
- la seconde machine motrice peut comprendre une première interface de couplage comprenant une première partie couplée à la batterie rechargeable via le premier faisceau électrique et une seconde partie couplée au chargeur via le second faisceau électrique ;
- en variante, la seconde machine motrice peut comprendre une première interface de couplage comprenant une première partie couplée à la batterie rechargeable via le premier faisceau électrique et une seconde partie couplée au chargeur via le second faisceau électrique et à la première partie via des moyens de commutation chargés de contrôler la recharge par le chargeur ;
- le chargeur peut comprendre une seconde interface de couplage connectée au premier faisceau électrique en l'absence de la seconde machine motrice, et connectée au second faisceau électrique en présence de la seconde machine motrice ;
- la chaîne de transmission peut également comprendre une troisième machine motrice thermique et participant à l'entraînement du second train ;
- il peut être de type automobile.

D'autres caractéristiques et avantages de l'invention apparaîtront à l'examen de la description détaillée ci-après, et des dessins annexés, sur lesquels :
- la figure 1 illustre schématiquement et fonctionnellement un exemple de réalisation d'un véhicule selon l'invention comprenant une première déclinaison de chaîne de transmission électrique, et
- la figure 2 illustre schématiquement et fonctionnellement le véhicule de la figure 1 avec une seconde déclinaison de chaîne de transmission électrique.

L'invention a notamment pour but de proposer un véhicule V comprenant une chaîne de transmission comportant selon la déclinaison soit une première machine motrice MM1 électrique et participant à l'entraînement d'un premier train T1, soit des première MM1 et seconde MM2 machines motrices électriques et participant à l'entraînement respectivement de premier T1 et second T2 trains, mais une même batterie rechargeable BR.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule comprenant une chaîne de transmission pouvant comporter une ou deux machines motrices électriques. Par conséquent, l'invention concerne au moins les véhicules terrestres.

Il est rappelé que l'on entend ici par « machine motrice électrique » une machine (ou un moteur) électrique agencé(e) de manière à fournir ou récupérer du couple pour déplacer un véhicule, soit seul(e) soit en complément d'au moins une éventuelle autre machine motrice électrique ou thermique (comme par exemple un moteur thermique (réacteur, turboréacteur ou moteur chimique)).

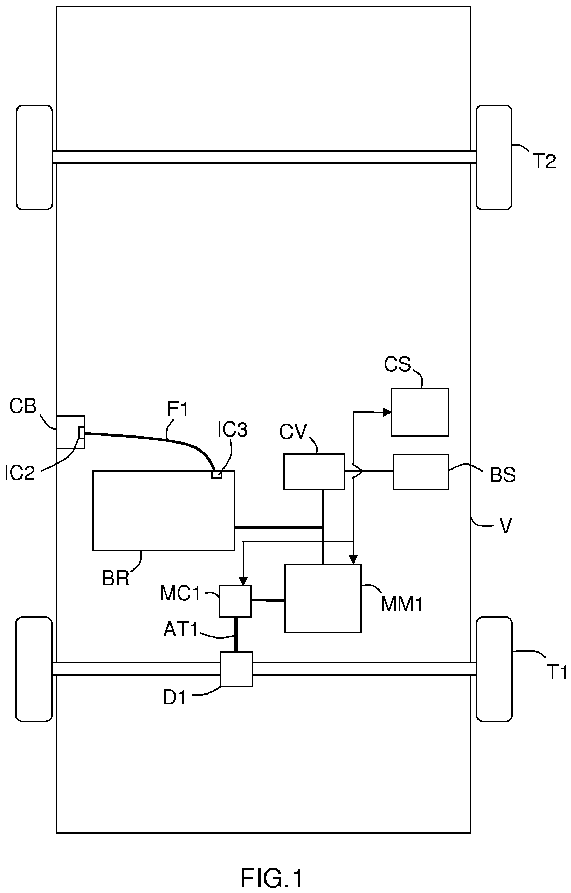

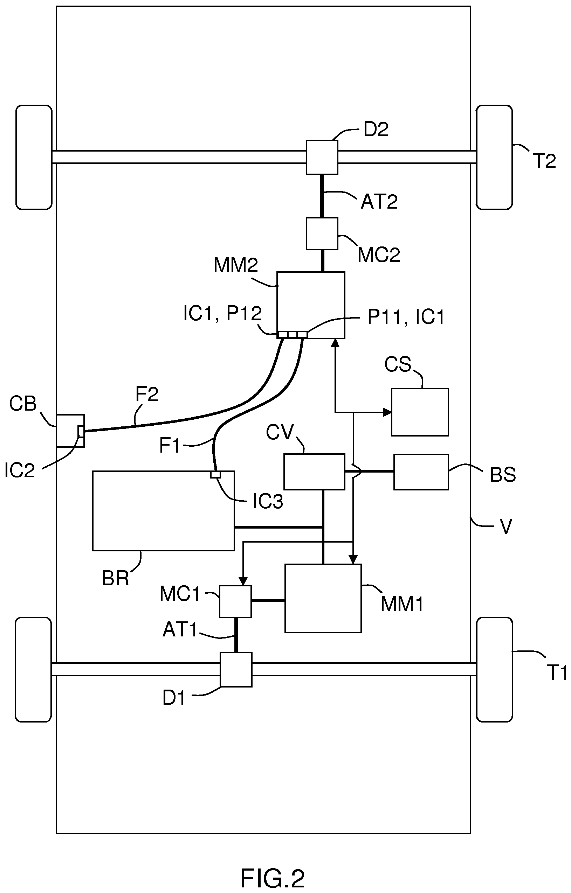

On a schématiquement représenté sur les figures 1 et 2 un même exemple de véhicule V mais avec deux déclinaisons différentes de la chaîne de transmission. Dans ces deux déclinaisons, la chaîne de transmission comprend au moins une première machine motrice MM1 électrique et participant à l'entraînement d'un premier train T1, une batterie rechargeable BR et un chargeur CB.

Dans les deux déclinaisons illustrées non limitativement sur les figures 1 et 2, la chaîne de transmission est de type tout électrique. Mais l'invention n'est pas limitée à ce type de chaîne de transmission. En effet, la chaîne de transmission pourrait être de type hybride en comportant en complément une machine motrice thermique associée à son second train T2.

La chaîne de transmission comprend ici, en complément de la première machine motrice MM1, de la batterie rechargeable BR et du chargeur CB, des premiers moyens de couplage MC1 et un premier arbre de transmission AT1. Le contrôle d'au moins la première machine motrice MM1 et des premiers moyens de couplage MC1 est assuré par un calculateur de supervision CS.

La batterie rechargeable BR est agencée pour stocker de l'énergie électrique, par exemple en basse tension (typiquement 300 V). Elle peut notamment être rechangée via le chargeur CB, comme on le verra plus loin.

Le chargeur CB est destiné à être raccordé à une source d'alimentation en courant externe, comme par exemple une borne de recharge ou une prise de courant du secteur, vi un cordon de charge dédié.

Les premiers moyens de couplage MC1 sont ici chargés de coupler/ découpler la première machine motrice MM1 au/du premier arbre de transmission AT1, sur ordre du calculateur de supervision CS, afin de communiquer du couple qu'elle produit et qui est défini par une consigne (de couple ou de régime), grâce à l'énergie électrique stockée dans la batterie rechargeable BR, au premier arbre de transmission AT1. Ce dernier (AT1) est couplé au premier train T1 (ici de roues).

Par exemple, le premier train T1 est situé à l'arrière du véhicule V, et de préférence, et comme illustré, couplé au premier arbre de transmission AT1 via un premier différentiel (ici arrière) D1. Mais dans une variante ce premier train T1 pourrait être situé à l'avant du véhicule V.

Les premiers moyens de couplage MC1 peuvent, par exemple, être un mécanisme à crabots ou un embrayage ou un convertisseur de couple hydraulique ou encore un frein. Ils peuvent prendre au moins deux états de couplage : un premier (couplé) dans lequel ils assurent le couplage de la première machine motrice MM1 au premier arbre de transmission AT1 et un second (découplé) dans lequel ils découplent la première machine motrice MM1 du premier arbre de transmission AT1. On notera qu'ils peuvent également prendre un état intermédiaire (par exemple pour un glissement d'embrayage).

Dans la seconde déclinaison illustrée sur la figure 2, la chaîne de transmission comprend, en complément de celle illustrée sur la figure 1, une seconde machine motrice MM2, des seconds moyens de couplage MC2 et un second arbre de transmission AT2.

La seconde machine motrice MM2 est de type électrique et participe à l'entraînement du second train T2.

Les seconds moyens de couplage MC2 sont ici chargés de coupler/ découpler la seconde machine motrice MM2 au/du second arbre de transmission AT2, sur ordre du calculateur de supervision CS, afin de communiquer du couple qu'elle produit et qui est défini par une consigne (de couple ou de régime), grâce à l'énergie électrique stockée dans la batterie rechargeable BR, au second arbre de transmission AT2. Ce dernier (AT2) est couplé au second train T2 (ici de roues).

Par exemple, le second train T2 est situé à l'avant du véhicule V, et couplé au second arbre de transmission AT2, de préférence, et comme illustré, via un second différentiel (ici avant) D2. Mais dans la variante précitée ce second train T2 pourrait être situé à l'arrière du véhicule V.

Les seconds moyens de couplage MC2 peuvent, par exemple, être un mécanisme à crabots ou un embrayage ou un convertisseur de couple hydraulique ou encore un frein. Ils peuvent prendre au moins deux états de couplage : un premier (couplé) dans lequel ils assurent le couplage de la seconde machine motrice MM2 au second arbre de transmission AT2 et un second (découplé) dans lequel ils découplent la seconde machine motrice MM2 du second arbre de transmission AT2. On notera qu'ils peuvent également prendre un état intermédiaire (par exemple pour un glissement d'embrayage).

Les fonctionnements de la seconde machine motrice MM2 et des seconds moyens de couplage MC2 sont contrôlés par le calculateur de supervision CS.

On notera également, comme illustré non limitativement sur les figures 1 et 2, que la chaîne de transmission peut aussi comprendre une batterie de servitude BS très basse tension (par exemple 12 V, 24 V ou 48 V). Cette batterie de servitude BS peut, par exemple, alimenter un réseau de bord auquel sont connectés des équipements électriques du véhicule V. On notera que la batterie de servitude BS peut, comme illustré non limitativement sur les figures 1 et 2, être couplée à la batterie rechargeable BR via un convertisseur CV de type DC/DC, afin de pouvoir être rechargée.

Selon l'invention, en l'absence de la seconde machine motrice MM2 (déclinaison de la figure 1), la batterie rechargeable BR est couplée directement au chargeur CB via un premier faisceau électrique F1, tandis qu'en présence de la seconde machine motrice MM2 (déclinaison de la figure 2), la batterie rechargeable BR est couplée indirectement au chargeur CB via la seconde machine motrice MM2 et des premier F1 et second F2 faisceaux électriques.

En d'autres termes, dans la première déclinaison de la figure 1, on recharge la batterie rechargeable BR par un couplage direct au chargeur CB via un premier faisceau électrique F1, tandis que dans la seconde déclinaison de la figure 2, on recharge la batterie rechargeable BR par un couplage indirect au chargeur CB via le premier faisceau électrique F1, la seconde machine motrice MM2 et le second faisceau électrique F2.

Ainsi, on peut avantageusement utiliser la même batterie rechargeable BR pour les deux déclinaisons de la chaîne de transmission, ce qui facilite la gestion de stock et la logistique tant en usine que dans les services après-vente. De plus, on est certain qu'une fois que l'on a conçu la seconde déclinaison (ou architecture) la plus complexe (c'est-à-dire à deux machines motrices électriques MM1 et MM2), la première déclinaison (ou architecture) à une seule machine motrice électrique MM1 peut être déduite de la seconde déclinaison par un retrait de la seconde machine motrice électrique MM2 et des équipements associés (MC2, AT2 et D2) en conservant le même chargeur CB et la même batterie rechargeable BR, ce qui simplifie la phase de conception du véhicule V.

Afin de permettre cette double déclinaison, la seconde machine motrice MM2 peut, comme illustré sur la figure 2, comprendre une première interface de couplage IC1 comprenant des première P11 et seconde P12 parties. La première partie P11 est couplée à la batterie rechargeable BR via le premier faisceau électrique F1 et la seconde partie P12 est couplée au chargeur CB via le second faisceau électrique F2.

Ainsi, lors d'une recharge, étant donné que la seconde machine motrice MM2 ne consomme pas de courant, le courant issu du chargeur CB remonte automatiquement vers la batterie rechargeable BR via le premier faisceau électrique F1. Par ailleurs, en dehors d'une recharge, lorsque la seconde machine motrice MM2 est utilisée, elle consomme du courant de la batterie rechargeable BR via le premier faisceau électrique F1.

Dans une variante de réalisation non illustrée, la seconde partie P12 de la première interface de couplage IC1 pourrait être couplée à la première partie P11 de la première interface de couplage IC1, par exemple via des moyens de commutation chargés de contrôler la recharge par le chargeur CB.

On notera que le chargeur CB peut, comme illustré sur les figures 1 et 2, comprendre une seconde interface de couplage IC2 connectée au premier faisceau électrique F1 en l'absence de la seconde machine motrice MM2, et connectée au second faisceau électrique F2 en présence de la seconde machine motrice MM2.

Dans une variante de réalisation non illustrée, la seconde interface de couplage IC2 pourrait comprendre des première et seconde parties. Une première partie est connectée au premier faisceau électrique F1 en l'absence de la seconde machine motrice MM2, et une seconde partie P22 est connectée au second faisceau électrique F2 en présence de la seconde machine motrice MM2.

De son côté, la batterie rechargeable BR comprend une troisième interface de couplage IC3 à laquelle est connecté le premier faisceau électrique F1 dans les deux déclinaisons.

On notera également, comme évoqué précédemment que la chaîne de transmission peut également et éventuellement comprendre une troisième machine motrice thermique et participant à l'entraînement du second train T2. Dans ce cas, cette troisième machine motrice (par exemple un moteur thermique) peut comprendre un vilebrequin solidarisé fixement à un arbre moteur et destiné à fournir du couple pour le second train T2, via des troisièmes moyens de couplage et les seconds moyens de couplage MC2. Ces troisièmes moyens de couplage peuvent, par exemple, être agencés sous la forme d'un embrayage. Mais il pourrait également s'agir d'un convertisseur de couple ou d'un crabot ou encore d'un frein. On notera que lorsque les troisièmes moyens de couplage sont associés aux seconds moyens de couplage MC2, ces derniers sont de préférence agencés sous la forme de moyens de changement de rapport (comme par exemple une boîte de vitesses ou au moins un train épicycloïdal).

## Revendications

1. Véhicule (V) comprenant une chaîne de transmission comportant une première machine motrice (MM1) électrique et participant à l'entraînement d'un premier train (T1), au moins une batterie rechargeable (BR) alimentant en énergie électrique au moins ladite première machine motrice (MM1) et couplée à un chargeur (CB), ainsi qu'éventuellement une seconde machine motrice (MM2) électrique et participant à l'entraînement d'un second train (T2), **caractérisé en ce qu'**en l'absence de ladite seconde machine motrice (MM2) ladite batterie rechargeable (BR) est couplée directement audit chargeur (CB) via un premier faisceau électrique (F1), tandis qu'en présence de ladite seconde machine motrice (MM2) ladite batterie rechargeable (BR) est couplée indirectement audit chargeur (CB) via ladite seconde machine motrice (MM2) et le premier (F1) et un second (F2) faisceaux électriques.

2. Véhicule selon la revendication 1, **caractérisé en ce que** ladite seconde machine motrice (MM2) comprend une première interface de couplage (IC1) comprenant une première partie (P11) couplée à ladite batterie rechargeable (BR) via ledit premier faisceau électrique (F1) et une seconde partie (P12) couplée audit chargeur (CB) via ledit second faisceau électrique (F2).

3. Véhicule selon la revendication 1, **caractérisé en ce que** ladite seconde machine motrice (MM2) comprend une première interface de couplage (IC1) comprenant une première partie (P11) couplée à ladite batterie rechargeable (BR) via ledit premier faisceau électrique (F1) et une seconde partie (P12) couplée audit chargeur (CB) via ledit second faisceau électrique (F2) et à ladite première partie (P11) via des moyens de commutation chargés de contrôler la recharge par ledit chargeur (CB).

4. Véhicule selon l'une des revendications 1 à 3, **caractérisé en ce que** ledit chargeur (CB) comprend une seconde interface de couplage (IC2) connectée audit premier faisceau électrique (F1) en l'absence de ladite seconde machine motrice (MM2), et connectée audit second faisceau électrique (F2) en présence de ladite seconde machine motrice (MM2).

5. Véhicule selon l'une des revendications 1 à 4, **caractérisé en ce que** ladite chaîne de transmission comprend également une troisième machine motrice thermique et participant à l'entraînement dudit second train (T2).

6. Véhicule selon l'une des revendications 1 à 5, **caractérisé en ce qu'**il est de type automobile.

## Patentansprüche

1. Fahrzeug (V) mit einer Übertragungskette,
die eine erste elektrische Antriebsmaschine (MM1) und die Teilnahme an dem Antrieb eines ersten Zuges (T1), mindestens eine wiederaufladbare Batterie (BR) Zuführen von zumindest der ersten elektrischer Energie. Antriebsmaschine (MM1) ist und mit einem Ladegerät (CB), sowie gegebenenfalls eine zweite elektrische Antriebsmaschine (MM2) und in dem Antrieb eines zweiten Zuges (T2), die Teilnahme **dadurch gekennzeichnet, dass** in Abwesenheit der zweiten Maschinenantrieb (MM2) die wiederaufladbare Batterie (BR) ist gekoppelt direkt mit dem Ladegerät (CB) über einen ersten Kabelbaum (F1), während in Gegenwart der zweiten Antriebsmaschine (MM2) die wiederaufladbare Batterie (BR) ist gekoppelt indirekt Ladegerät wobei (CB) über die zweite Antriebsmaschine (MM2) und den ersten (F1) und einen zweiten (F2) Kabelbaum elektrisches.

2. Fahrzeug nach Anspruch 1, **dadurch gekennzeichnet, dass** die zweite Antriebsmaschine (MM2) eine erste Koppelungsschnittstelle (IC1),
die einen ersten Abschnitt (P11), der mit dem wiederaufladbaren Batterie (BR) über die ersten Kabelbaum (F1) und einen zweiten Teil (P12), der über den zweiten elektrischen Kabelbaum (F2) mit dem Ladegerät (CB) verbunden ist.

3. Fahrzeug nach Anspruch 1, **dadurch gekennzeichnet, dass** die zweite Antriebsmaschine (MM2) eine erste Kopplungsschnittstelle (IC1) umfasst, die einen ersten Teil (P11) umfasst, der über den ersten elektrischen Kabelbaum (F1) und einen zweiten mit der wiederaufladbaren Batterie (BR) verbunden ist Teil (P12), der über den zweiten elektrischen Kabelbaum (F2) mit dem Ladegerät (CB) und über Schaltmittel, die für die Steuerung des Wiederaufladens durch das Ladegerät (CB) verantwortlich sind, mit dem ersten Teil (P11) verbunden ist.

4. Fahrzeug nach einem der Ansprüche 1 bis 3, **dadurch gekennzeichnet, dass** das Ladegerät (CB) eine zweite Schnittstelle zur Kopplung (IC2) umfasst, die mit dem ersten elektrischen Strahl (F1) in Abwesenheit der
zweiten Antriebsmaschine (MM2) verbunden und verbunden ist an den zweiten Kabelbaum (F2) in Gegenwart der zweiten Antriebsmaschine (MM2).

5. Fahrzeug nach einem der Ansprüche 1 bis 4, **dadurch gekennzeichnet, dass** die Übertragungskette auch eine dritte thermische Antriebsmaschine umfasst und am Antrieb des zweiten Zuges (T2) teilnimmt.

6. Fahrzeug nach einem der Ansprüche 1 bis 5, **dadurch gekennzeichnet, dass** es vom Kraftfahrzeugtyp ist.

## Claims

1. Vehicle (V) comprising a transmission chain comprising a first electric drive machine (MM1) and participating in the drive of a first train (T1), at least one rechargeable battery (BR) supplying at least said first electric energy. driving machine (MM1) and coupled to a charger (CB), as well as possibly a second electric driving machine (MM2) and participating in the driving of a second train (T2), **characterized in that** in the absence of said second driving machine(MM2) said rechargeable battery (BR) is coupled directly to said charger (CB) via a first electrical harness (F1), while in the presence of said second driving machine (MM2) said rechargeable battery (BR) is coupled indirectly said charger (CB) via said second driving machine (MM2) and the first (F1) and a second (F2) harness electrics.

2. Vehicle according to claim 1, **characterized in that** said second prime mover (MM2) comprises a first coupling interface (IC1) comprising a first portion (P11) coupled to said rechargeable battery (BR) via said first wire harness (F1) and a second part (P12) coupled to said charger (CB) via said second electrical harness (F2).

3. Vehicle according to claim 1, **characterized in that** said second driving machine (MM2) comprises a first coupling interface (IC1) comprising a first part (P11) coupled to said rechargeable battery (BR) via said first electrical harness (F1) and a second part (P12) coupled to said charger (CB) via said second electrical harness (F2) and to said first part (P11) via switching means responsible for controlling recharging by said charger (CB).

4. Vehicle according to one of claims 1 to 3, **characterized in that** said charger (CB) comprises a second interface for coupling (IC2) connected to said first electric beam (F1) in the absence of said second prime mover (MM2), and connected to said second wire harness (F2) in the presence of said second prime mover (MM2).

5. Vehicle according to one of claims 1 to 4, **characterized in that** said transmission chain also comprises a third thermal drive machine and participating in the drive of said second train (T2).

6. Vehicle according to one of Claims 1 to 5, **characterized in that** it is of the automobile type.
